# EUROPÄISCHE PATENTSCHRIFT

(11) **EP 2 254 819 B1**
(45) Veröffentlichungstag und Bekanntmachung des Hinweises auf die Patenterteilung: **03.10.2012**
(21) Anmeldenummer: 09713517.2
(22) Anmeldetag: 06.02.2009
(51) Int. Cl.: B65G 57/30

(54) **VORRICHTUNG ZUM STAPELN VON PRODUKTGRUPPEN ODER GEBINDEN**
DEVICE FOR STACKING GROUPS OF PRODUCTS OR CONTAINERS
DISPOSITIF D'EMPILAGE DE GROUPES DE PRODUITS OU D' EMBALLAGES

(30) Priorität: 20.02.2008 DE 102008010259
(43) Veröffentlichungstag der Anmeldung: 01.12.2010
(73) Patentinhaber: KHS GmbH, 44143 Dortmund (DE)
(72) Erfinder: TORSTEN, Maiweg, 45574 Goch (DE)
(86) Internationale Anmeldenummer: PCT/EP2009/000853
(87) Internationale Veröffentlichungsnummer: WO 2009/103433

(56) Entgegenhaltungen:
- DE-A1- 3 312 006
- US-A- 1 557 765
- US-A- 4 212 579

## Beschreibung

Die Erfindung bezieht sich auf eine Vorrichtung gemäß Oberbegriff Patentanspruch 1, sowie ein Verfahren zum Kontinuierlichen Stapeln von Produktgruppen mit einer Solchen Vorrichtung.

Beispielsweise im Bereich Nahrungsmittel und Getränke, aber auch in vielen anderen Bereichen der Wirtschaft, beispielsweise im Bereich de Pharmazie und Kosmetik ist es üblich, mit dem jeweiligen Produkt gefüllte Packmittel, z.B. Beutel, Tuben, Behälter, wie z.B. Dosen oder Flaschen zu Produktgruppen oder Gebinden zusammenzufassen. Hierbei ist vielfach auch erwünscht, derartige Produktgruppen beispielsweise für die Lagerung und/oder den Transport zu stapeln, d.h. aus jeweils wenigstens zwei Produktgruppen jeweils einen zumindest zweilagigen Produktgruppenstapel zu bilden, der dann beispielsweise in dieser Form transportiert, gelagert oder zum Verkauf bereitgestellt wird, oder aber mit mehreren gleichartigen Produktgruppen- oder Gebindestapeln für die Lagerung und/oder den Transport usw. zu einem größeren Stapel zusammengestellt wird.

Aus der US 4,212,579 B1 ist eine Vorrichtung gemäβß Oberbegriff Patentanspruch 1 bekannt, bei welcher Pakete aufeinander gestellt werden. Hierzu wird mittels einer Hubgabel ein nachfolgendes Paket auf einem Pakte abgestellt, welches sich in einer Warteposition befindet. Aufgrund des somit nötigen Schrittbetriebes sind derartige Stapelvorrichtungen in ihrer Leistung stark begrenzt.

Aufgabe der Erfindung ist es, eine Vorrichtung sowie ein Verfahren aufzuzeigen, die ein Stapeln von Produktgruppen bei vereinfachter konstruktiver Ausbildung und hoher Betriebssicherheit ermöglicht. Zur Lösung dieser Aufgabe ist eine Vorrichtung entsprechend dem Patentanspruch 1 sowie ein Verfahren zum Kontinuierlichen Stapeln von Produktgruppen entsprechend dem Patentanspruch ausgebildet.

Bei der erfindungsgemäßen Vorrichtung erfolgt das Stapeln der Produktgruppen unter Verwendung einer Greifer- und Hubeinrichtung mit wenigstens einem Greiferkopf In Linie, d.h. ohne die Notwendigkeit eines seitlichen Umsetzens der Produktgruppen quer zur Förderrichtung, sowie im Durchlauf, d.h. bei kontinuierlich angetriebener Vorrichtung. Für den wenigstens einen Greiferkopf ist dann ausschließlich eine vertikale Hubbewegung ausreichend.

Welterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten

Die Erfindung wird im Folgenden anhand der Figuren an einem Ausführungsbeispiel näher erläutert. Es zeigen:

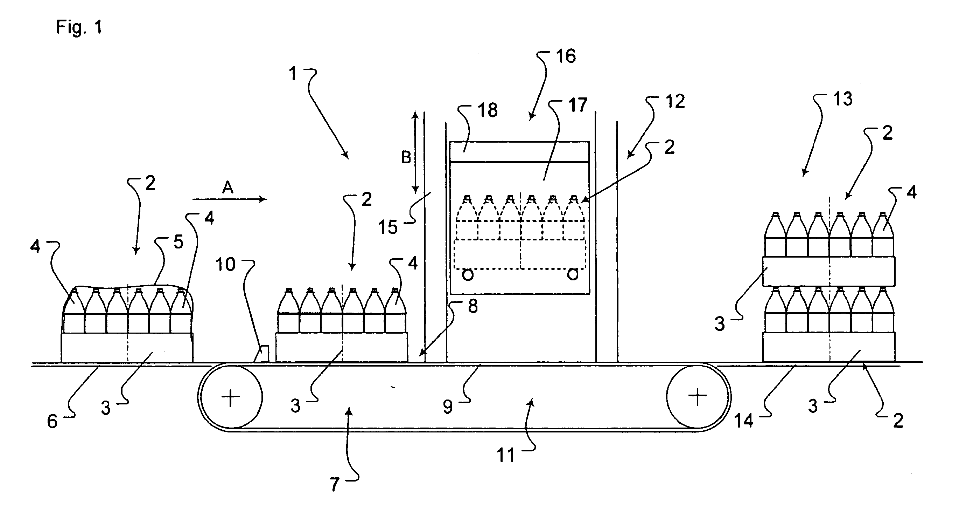

Fig. 1 in vereinfachter Darstellung und in Seitenansicht eine Vorrichtung zum Stapeln von Produktgruppen bzw. Gebinden;

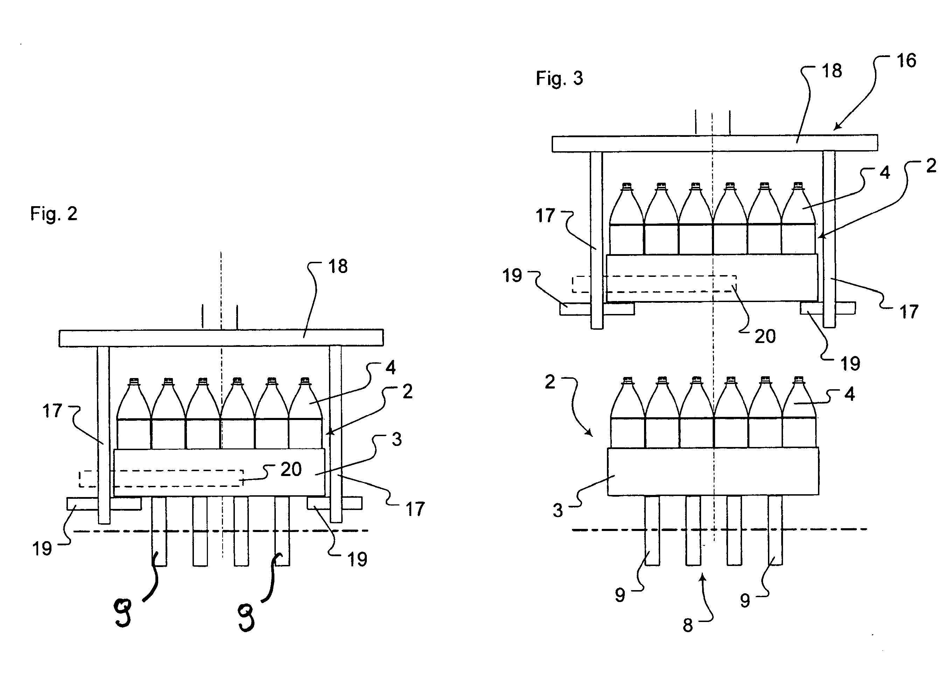

Fig. 2 u. 3 schematische Darstellungen zur Erläuterung der Arbeitsweise der Vorrichtung der Figur 1.

Die in den Figuren allgemein mit 1 bezeichnete Vorrichtung dient zum Stapeln von Produktgruppen oder Gebinden 2, die jeweils mehrere auf einem Träger oder Tray 3 angeordnete Behälter in Form von Flaschen 4 aufweisen. In jedem Gebinde 2 sind die Flaschen 4 in mehreren Reihen auf dem Träger 3 aufrechtstehend vorgesehen und dort beispielsweise mittels einer aufgeschrumpften Schrumpffolie 5 zu dem Gebinde zusammen gehalten.

Zum Stapeln werden die Gebinde 2 der Vorrichtung 1 bzw. eine Bereitstellungsposition 7 dieser Vorrichtung über einen äußeren Transporteur 6 horizontal oder im Wesentlichen horizontal als einspuriger Gebindestrom zugeführt (Pfeil A). Durch einen vorrichtungsinternen Transporteur 8, der bei der dargestellten Ausführungsform aus mehreren parallelen Transportketten 9 mit Mitnehmern 10 besteht, wird jedes an der Bereitstellungsposition 7 bereitstehende Gebinde 2 an eine Stapelposition 11 bzw. in den dortigen Wirkungsbereich einer Greifer- und Hubeinrichtung 12 bewegt.

Die Transportketten 9 bilden jeweils Schlaufen, die mit ihrer Schlaufenebene in vertikaler Richtung orientiert parallel und voneinander beabstandet vorgesehen sind und die mit der oberen Länge jeder Schlaufe Standflächen für die Gebinde 2 bilden, auf denen diese Gebinde mit der Unterseite ihrer Träger 3 aufstehen.

Die Greifer- und Hubeinrichtung 12 ist so ausgebildet, dass von jeweils zwei in Transportrichtung A aufeinander folgend über den Transporteur 6 zugeführten Gebinden 2 das vorauseilende Gebinde 2 an der Stapelposition 11 von der Greifer- und Hubeinrichtung 12 in vertikaler Richtung angehoben und im Anschluss daran auf das nachfolgende, mit dem Transporteur 8 an die Stapelposition 11 geförderte Gebinde 2 abgesetzt wird (Doppelpfeil B). Es werden somit jeweils aus zwei Gebinden 2 bestehende Gebindestapel 13 gebildet, die dann mit dem Transporteur 8 auf einen äußeren Transporteur 14 oder einen Transporttisch bewegt werden, über den diese Gebindestapel 13 einer weiteren Verwendung zugeführt werden.

Das Stapeln der Gebinde 2 zu den Gebindestapeln 13 erfolgt in Linie, d.h. ohne seitliches Umsetzen der Gebinde 2 und in einem kontinuierlichen Verfahren, d.h. die Gebinde 2 werden der Vorrichtung 1 über den äußeren Transporteur 6 kontinuierlich zugeführt und mit dem inneren Transporteur 8 kontinuierlich an die Stapelposition 11 bewegt, wobei lediglich durch entsprechende, dargestellte Mittel, beispielsweise Sperren dafür gesorgt ist, dass von jeweils zwei in Förderrichtung A aufeinanderfolgenden Gebinden 2 das zweite, d.h. in Transportrichtung A nachfolgende Gebinde 2 erst dann an die Stapelposition 11 gelangt, wenn das in Transportrichtung A vorauseilende Gebinde 2 mit der Greifer- und Hubeinrichtung 12 bereits in eine Position oberhalb der Bewegungsbahn des nachfolgenden Gebindes 2 angehoben ist. Auch das Absetzen des mit der Greifer- und Hubeinrichtung 12 angehobenen Gebindes auf das untere, an der Stapelposition 11 bereitstehende Gebinde und das Ausschieben der Gebinde erfolgt kontinuierlich.

Mehr im Detail besteht die Greifer- und Hubeinrichtung 12 u.a. aus einem an einem Vorrichtungsgestell 15 gesteuert in vertikaler Richtung auf und ab bewegbaren Greiferkopf 16 mit zwei seitlichen Führungsabschnitten oder -wänden 17, die an der Oberseite des Greiferkopfes 16 in geeigneter Weise durch wenigstens eine Traverse 18 miteinander verbunden sind. Die Führungswände 17 bzw. die von diesen gebildeten Führungen sind parallel zueinander und im Abstand voneinander in vertikalen Ebenen parallel zur Transportrichtung A angeordnet. Der Abstand der Führungswände 17 bzw. der von diesen gebildeten Führungen ist an die Breite angepasst, die die Gebinde 2 in horizontaler Richtung und senkrecht zur Transportrichtung A aufweisen. Die Hubbewegung (Doppelpfeil B) des Greiferkopfes 16 erfolgt beispielsweise durch einen mechanischen Antrieb.

Im Bereich des unteren Randes sind an den Führungswänden 17 jeweils zwei Greifer oder Mitnehmer 19 vorgesehen, die synchron mit der Bewegung des Transporteurs 8 und auch synchron mit der Hubbewegung des Greiferkopfes 16 gesteuert zwischen einer nichtwirksamen Stellung, in der die Mitnehmer 19 aus dem Raum zwischen den Führungswänden 17 herausbewegt sind, und einer wirksamen Stellung bewegbar sind, in der die Mitnehmer 19 in den Raum zwischen den Führungswänden 17 derart hineinreichen, dass diese Mitnehmer 19 beim Anheben des jeweiligen Gebindes 2 gegen die Unterseite dieses Gebindes bzw. des betreffenden Trägers 3 anliegen.

An den der Bereitstellungsposition 7 bzw. dem Transporteur 14 zugewandten offenen Seiten ist am Greiferkopf 16 jeweils ein Positionierelement 20 vorgesehen. Diese sind ebenfalls synchron mit der Bewegung des Transporteurs 8 und der Hubbewegung des Greiferkopfes 16 gesteuert, und zwar zwischen einer wirksamen und einer nicht wirksamen Stellung. Bei der dargestellten Ausführungsform sind die Positionierelemente 20 schwenkbare Bügel, die in ihrer wirksamen Stellung das im Greiferkopf 16 angeordnete Gebinde 2 vor dem Absetzen auf das jeweils untere Gebinde 2 des Gebindestapels 13 exakt positionieren und damit u.a. sicherstellen, dass die Gebinde in jedem Gebindestapel 13 ausgerichtet, beispielsweise deckungsgleich übereinander angeordnet sind. Ebenso wie die Mitnehmer 19 sind auch die Positionierelemente 20 beispielsweise durch Zylinder, z.B. Pneumatikzylinder betätigt.

Um ein möglichst verzögerungsfreies Anheben der Gebinde 2 mit dem Greiferkopf 16 und eine möglichst hohe Leistung für die Vorrichtung 1 (Anzahl der je Zeiteinheit verarbeitenden Gebinde 2) zu erreichen, erfolgt die Steuerung der Greifer- und Hubeinrichtung 12 bzw. des Greiferkopfes 16 bevorzugt so, dass sich de Greiferkopf 16 beim Hineinbewegen eines anzuhebenden Gebindes 2 in die Stapelposition 11 bereits in seiner unteren Hubstellung befindet, und zwar mit aufeinander zu bewegten, d.h. in der Greifposition befindlichen Mitnehmern 17, die sich dabei unterhalb der Transportebene des Transporteurs 8 befinden. Weiterhin sind die Greifer- und Hubeinrichtung 12 bzw. der Greiferkopf 16 vorzugsweise so gesteuert, dass unmittelbar nach dem Absetzen des angehobenen Gebindes 2 auf ein unteres, an die Stapelposition 11 bewegtes Gebinde 2 die Mitnehmer 17 das oberen Gebinde 2 frei geben und unmittelbar nach dieser Freigabe der Gebindestapel 13 auf den äußeren Transporteur 14 ausgeschoben wird, und zwar bei sich nach unten bewegendem Greiferkopf 16.

Die Vorteile der beschriebenen Vorrichtung 1 bestehen u.a. darin, dass mit dieser Vorrichtung bei einer relativ einfachen, robusten und damit auch betriebssicheren Konstruktion die Bildung von zweilagigen Gebindestapeln 13 möglich ist, in denen die Einzelgebinde 2 jeweils exakt übereinander stehen bzw. deckungsgleich mit einander angeordnet sind. Das Stapeln der Einzelgebinde 2 erfolgt im Durchlauf, d.h. in einem kontinuierlichen. Verfahren insbesondere ohne einen Stop- und Go-Betrieb der Vorrichtung 1 und ohne die mit einem solchen Betrieb verbundenen Nachteile eines ständigen Beschleunigens und Abbremsens von Antrieben, Maschinen- und Funktionselementen usw.

Eine wesentliche Besonderheit der Vorrichtung 1 besteht auch darin, dass die Bildung der Gebindestapel 13 in Linie ohne seitliches Umsetzen erfolgt und dass hierfür der Greiferkopf 16 ausschließlich in vertikaler Richtung bewegt wird.

Die Vorrichtung 1 lässt sich kostengünstig und platzsparend mit Pneumatik, Servotechnik oder auch mit mechanischen Komponenten realisieren und ist leicht bedienbar sowie einstellbar.

Die Erfindung wurde voranstehend an Ausführungsbeispielen beschrieben. Es versteht sich, dass Änderungen sowie Abwandlungen möglich sind, ohne dass dadurch der die Erfindung tragende Gedanke verlassen wird.

So ist es beispielsweise möglich, die an dem Greiferkopf 16 vorgesehenen Mitnehmer 17 rollend auszuführen, sodass es hierdurch möglich ist, dass jeweilige Gebinde 2 bereits beim Hineinbewegen in die Stapelposition 11 gegen die Mitnehmer 17 des sich nach oben bewegenden Greiferkopfes 15 anliegt oder der Gebindestapel 13 bereits bei noch anliegenden Mitnehmern 19 ausgeschoben wird, wodurch die Taktzeit der Greifer- und Hubeinrichtung 12 verkürzt und damit die Leistung der Vorrichtung 1 weiter erhöht wird.

Vorstehend wurde davon ausgegangen, dass mit der Vorrichtung 1 Gebindestapel 13 aus jeweils zwei Gebinden 2 gebildet werden, die ihrerseits bereits durch eine aufgeschrumpfte Schrumpffolie 5 gesichert bzw. zusammengehalten sind. Selbstverständlich besteht auch die Möglichkeit, bei ausreichender Stabilität der Gebinde 2 diese ohne eigene Fixierung durch eine aufgeschrumpfte Schrumpffolie 5 zu den Gebindestapeln 13 zu stapeln und dann beispielsweise lediglich die Gebindestapel 13 bzw. die Mehrfachgebinde in geeigneter Weise, beispielsweise durch Aufschrumpfen einer Schrumpffolie zu sichern.

Weiterhin wurde vorstehend davon ausgegangen, dass die Produktgruppen bzw. Gebinde 2 jeweils aus mehreren Flaschen 4 bestehen. Selbstverständlich eignet sich die erfindungsgemäße Vorrichtung ganz allgemein zum Stapeln von Produktgruppen, d.h. zum Stapeln von zu Gruppen zusammengefassten Produkten, insbesondere zum Stapeln von in Packmitteln abgefüllten und zu Gruppen zusammengefassten Produkten. Die Packmittel sind dabei insbesondere Beutel, Dosen oder andere hohlkörperartige Packmittel oder Behälter sind. Weiterhin ist es für die Arbeitsweise der erfindungsgemäßen Vorrichtung auch nicht erforderlich, dass die Produkte der Produktgruppen jeweils auf einem Träger angeordnet sind, vielmehr können die Produkte auch auf andere Weise zu stabilen, d.h. mit der erfindungsgemäßen Vorrichtung 1 handhabbaren Produktgruppen zusammengefasst sein.

### Bezugszeichenliste

- 1: Vorrichtung zum Stapeln von Produktgruppen
- 2: Produktgruppe oder Gebinde
- 3: Träger oder Tray
- 4: Flasche oder Behälter
- 5: Schrumpffolie
- 6: äußerer Transporteur zum Zuführen der Produktgruppen
- 7: Bereitstellungsposition der Vorrichtung 1
- 8: Vorrichtungsinterner Transporteur
- 9: Transportkette
- 10: Mitnehmer an Transportkette 9
- 11: Stapelposition der Vorrichtung 1
- 12: Greifer- und Hubeinrichtung
- 13: Gebindestapel oder mehrlagiges Gebinde
- 14: äußeres Transportelement
- 15: Vorrichtungsgestell
- 16: Greiferkopf
- 17: Führungswand
- 18: Traverse
- 19: Mitnehmer
- 20: Positionierelement
- A: Transportrichtung
- B: Hubrichtung der Greifer- und Hubeinrichtung 12 bzw. des Greifers 15

## Patentansprüche

1. Vorrichtung zum Stapeln von Produktgruppen (2), mit einer Transportstrecke (6, 8, 14) zum Zuführen der Produktgruppen (2) in einem wenigstens einspurigen Produktgruppenstrom und zum Abführen der zu Produktgruppenstapel (13) gestapelten Produktgruppen (2) sowie mit einer Einrichtung (12) an der Transportstrecke (8) zur Bildung der Produktgruppenstapel (13), wobei die Einrichtung zur Bildung der Produktgruppenstapel (13) eine Greifer- und Hubeinrichtung (12) mit wenigstens einem Greiferkopf (16) ist, wobei
die Transportstrecke (8) im Bereich der Einrichtung (12) durchgängig und antreibbar ist **dadurch gekennzeichnet, dass** die Greifer- und Hubeinrichtung (12) in ausschließlich vertikaler Richtung (B) gesteuert in der Weise auf und ab bewegbar ist, dass von jeweils zwei in Förderrichtung (A) der Transportstrecke (6, 8, 14) aufeinanderfolgenden Produktgruppen (2) eine vorauseilende Produktgruppe (2) an einer Stapelposition (11) von dem Greiferkopf (16) erfasst, angehoben und anschließend auf eine nachfolgende, an die Stapelposition (11) gelangte Produktgruppe (2), welche kontinuierlich mittels der Transportstrecke (8) gefördert und auf dieser Produktgruppe (2) abgesetzt wird.

2. Vorrichtung nach Anspruch 1, **gekennzeichnet durch** einen vorrichtungsinternen Transporteur (8), mit dem die der Vorrichtung (1) zugeführten Produktgruppen (2) jeweils an die Stapelposition (11) der Greifer- und Hubeinrichtung (12) bewegt werden.

3. Vorrichtung nach Anspruch 1 oder 2, **dadurch gekennzeichnet, dass** die Hubbewegung (B) des Greiferkopfes (16) mit der Förderbewegung der Transportstrecke (6, 8, 14) oder des vorrichtungsinternen Transporteurs (8) synchronisiert ist.

4. Vorrichtung nach einem der vorhergehenden Ansprüche, **dadurch gekennzeichnet, dass** der wenigstens eine Greiferkopf (16) Mitnehmer (19) aufweist, die zwischen einem wirksamen Zustand zum Greifen und Halten der jeweils anzuhebenden Produktgruppe (2) und einem nicht wirksamen Zustand zum Freigeben dieser Produktgruppe (2) steuerbar sind.

5. Vorrichtung nach Anspruch 4, dadurch gekenntzeichnet, dass die Mitnehmer (19) von beweglichen, beispielsweise axial beweglichen Fingern gebildet sind.

6. Vorrichtung nach einem der vorhergehenden Ansprüche, **gekennzeichnet durch** Mittel (20) zum exakten Positionieren der jeweils mit dem Greiferkopf (16) erfassten Produktgruppe (2) im Greiferkopf (16) vor dem Absetzen auf eine weitere an der Stapelposition (11) befindliche Produktgruppe (2).

7. Vorrichtung nach Anspruch 6, **dadurch gekennzeichnet, dass** die Mittel (20) zum Positionieren an dem wenigstens einen Greiferkopf (16) vorgesehen sind.

8. Vorrichtung nach Anspruch 6 oder 7, **dadurch gekennzeichnet, dass** die Mittel (20) zum Positionieren von gesteuert schwenkbaren Bügeln gebildet sind.

9. Vorrichtung nach einem der vorhergehenden Ansprüche 4 bis 8, **dadurch gekennzeichnet, dass** sich in der unteren Position der Hubbewegung (B) des wenigstens einen Greiferkopfes (16) die Mitnehmer (19) unterhalb einer Transportebene der Produktgruppen (2) befinden.

10. Vorrichtung nach einem der vorhergehenden Ansprüche 4 bis 9, **dadurch gekennzeichnet, dass** sich die Mitnehmer (19) in der oberen Stellung der Hubbewegung (B) des wenigstens einen Greiferkopfes (16) auf einem Niveau oberhalb der Oberseite der Produktgruppen (2) an der Stapelposition (11) befinden.

11. Vorrichtung nach einem der vorhergehenden Ansprüche 4 bis 10, **dadurch gekennzeichnet, dass** der vorrichtungsinterne Transporteur (8) von wenigstens einem endlos angetriebenen band- und/oder kettenartigen Transportelement (9) gebildet ist.

12. Vorrichtung nach Anspruch 11, **dadurch gekennzeichnet, dass** das wenigstens eine Transportelement (9) mit einer oberen Schlaufenlänge eine Transportebene oder Transportfläche bilden, auf der die Produktgruppen (2) aufstehen.

13. Vorrichtung nach einem der Ansprüche 11 oder 12, **dadurch gekennzeichnet, dass** das wenigstens eine Transportelement (9) mit den Produktgruppen (2) zusammenwirkenden Mitnehmern (10) ausgebildet ist.

14. Vorrichtung nach einem der vorhergehenden Ansprüche 2 bis 13, **dadurch gekennzeichnet, dass** der vorrichtungsinterne Transporteur (8) von mehreren parallel zueinander angeordneten, endlos umlaufend angetriebenen Transportelementen (9) gebildet ist.

15. vorrichtung nach einem der vorhergehenden Ansprüche, **gekennzeichnet durch** Mittel zur Erzeugung eines vorgegebenen Maschinenabstandes zwischen den in Transportrichtung (A) aufeinander folgenden Produktgruppen (2) zumindest beim Bewegen an die Stapelposition (11).

16. Vorrichtung nach einem der vorhergehenden Ansprüche 2 bis 15, **dadurch gekennzeichnet, dass** die Antriebe zumindest des vorrichtungsinternen Transporteurs (8), der Hubbewegung des wenigstens einen Greiferkopfes (16), der Mitnehmer (19) am Greiferkopf (16) sowie gegebenenfalls auch der Mittel (20) zum Positionieren derart synchronisiert sind, dass ein Stapeln der Produktgruppen (2) im Durchlauf, d.h, in einem kontinuierlichen oder quasi kontinuierlichen Betrieb der Vorrichtung (1) erfolgt.

17. Vorrichtung nach einem der vorhergehenden Ansprüche, **gekennzeichnet durch** ihre Ausbildung zum Stapeln von Produktgruppen (2) in Form von Gebinden jeweils bestehend aus mehreren zu einem solchen Gebinde (2) zusammengefassten Behältern oder Flaschen (4).

18. Verfahren zum kontinuierlichen Stapeln von Produktgruppen. (2), **dadurch gekennzeichnet, dass** eine Vorrichtung nach einem der Ansprüche 1 bis 17 verwendet wird, wobei der wenigstens eine Greiferkopf (16) derart gesteuert wird, dass die jeweilige von diesem Greiferkopf (16) erfasste und angehobene erste Produktgruppe (2) sich in der oberen Hubstellung des Greiferkopfes (16) mit Abstand oberhalb einer weiteren, an die Stapelposition (11) bewegten Produktgruppe (2) befindet, und dass das Aufsetzen der mit dem Greiferkopf (16) erfassten erste Produktgruppe (2) auf die weitere Produktgruppe (2) durch Absenken des Greiferkopfes (16) bzw. während des Rückhubes des Greiferkopfes (16) in die untere Hubstellung erfolgt, wobei die weiter Produktgruppe (2) kontinuierlich in Transportrichtung gefördert wird.

## Claims

1. Device for stacking groups of products (2), comprising a conveyor belt (6, 8, 14) for supplying the groups of products to an at least one-track product group flow and for extracting the groups of products (2) stacked in a product group stack (13), and with a device (12) on the conveyor belt (8) for forming the product group stack (13), wherein the device for forming the product group stack (13) is a gripping and lifting device (12) with at least one gripper head (16), wherein the conveyor belt (8) in the region of the device (12) is continuous and driveable, **characterised in that** the gripping and lifting device (12) can be moved up and down under control in an exclusively vertical direction (B) such that from each two groups of products (2) succeeding each other in the transport direction (A) of the conveyor belt (6, 8, 14), a leading product group (2) is grasped by the gripper head (16) at a stack position (11), raised and then deposited on a following product group (2) which has reached the stack position (11) and is transported continuously by means of the conveyor belt (8).

2. Device according to claim 1, **characterised by** a transporter (8) internal to the device with which the groups of products (2) supplied to the device (1) are moved at the stack position (11) of the gripping and lifting device (12).

3. Device according to claim 1 or 2, **characterised in that** the lifting movement (B) of the gripper head (16) is synchronised with the transport movement of the conveyor belt (6, 8, 14) or the transporter (8) internal to the device.

4. Device according to any one of the preceding claims, **characterised in that** the at least one gripper head (16) comprises carriers (19) which are controllable between an active state for gripping and holding the respective product group (2) to be raised and an inactive state for release of this product group (2).

5. Device according to claim 4, **characterised in that** the carriers (19) are formed by mobile, for example axially mobile, fingers.

6. Device according to any one of the preceding claims, **characterised by** means (20) for precise positioning in the gripper head (16) of the product group (2) grasped by the gripper head (16) before it is deposited on a further product group (2) present at the stack position (11).

7. Device according to claim 6, **characterised in that** the means (20) for positioning are provided at the at least one gripper head (16).

8. Device according to claim 6 or 7, **characterised in that** the means (20) for positioning are formed by controlled pivotable brackets.

9. Device according to any one of the preceding claims 4 to 8, **characterised in that** in the lower position of the lift movement (B) of the at least one gripper head (16), the carriers (19) are below a transport level of the groups of products (2).

10. Device according to any one of the preceding claims 4 to 9, **characterised in that** in the upper position of the lift movement (B) of the at least one gripper head (16), the carriers (19) are at a level above the top of the groups of products (2) in the stack position (11).

11. Device according to any one of the preceding claims 4 to 10, **characterised in that** the transporter (8) internal to the device is formed by at least one endlessly driven belt and/or chain-like transport element (9).

12. Device according to claim 1, **characterised in that** at least one transport element (9) with an upper loop length forms a transport level or transport surface on which the groups of products (2) stand.

13. Device according to any one of the preceding claims 11 or 12, **characterised in that** at least one transport element (9) is formed with carriers (10) cooperating with the groups of products (2).

14. Device according to any one of the preceding claims 2 to 13, **characterised in that** the transporter (8) internal to the device is formed by several transport elements (9) arranged parallel to each other and driven in endless circulation.

15. Device according to any one of the preceding claims, **characterised by** means to generate a predefined machine spacing between the groups of products (2) following each other in the transport direction (A), at least on movement at the stack position (11).

16. Device according to any one of the preceding claims 2 to 15, **characterised in that** the drives of at least the transporter (8) internal to the device, the lift movement of the at least one gripper head (16), the carriers (19) at the gripper head (16) and where applicable also the positioning means (20), are synchronised such that a stacking of the groups of products (2) takes place continuously, i.e. in a continuous or quasi-continuous operation of the device (1).

17. Device according to any one of the preceding claims, **characterised by** its design for stacking groups of products (2) in the form of drums each comprising several containers or bottles (4) combined into such a drum (2).

18. Method for continuous stacking of groups of products (2), **characterised in that** a device according to any of claims 1 to 17 is used, wherein the at least one gripper head (16) is controlled such that in the upper lift position of the gripper head (16), the respective first product group (2) grasped and raised by this gripper head (16) is spaced above a further product group (2) moved at the stack position (11), and that the first product group (2) grasped by the gripper head (16) is placed on the further product group (2) by lowering of the gripper head (16) or during the return stroke of the gripper head (16) to the lower lift position, wherein the further product group (2) is transported continuously in the transport direction.

## Revendications

1. Dispositif servant à empiler des groupes de produits (2), comportant un trajet de transport (6, 8, 14) servant à amener les groupes de produits (2) dans une flux de groupes de produits à au moins une seule voie et servant à évacuer des groupes de produits (2) empilés formant des piles de groupes de produits (13) et comportant également un système (12) au niveau du trajet de transport servant à former les piles de groupes de produits (13), sachant que le système servant à former les piles de groupes de produits (13) est un système de préhension et de levage (13) doté d'au moins une tête de préhension (16), sachant que le trajet de transport (8) peut être traversé et entraîné dans la zone du système (12),
**caractérisé en ce que** le système de préhension et de levage (12) peut se déplacer en va-et-vient exclusivement dans la direction verticale (B) de manière commandée de telle manière que la tête de préhension (16) détecte, soulève parmi respectivement deux groupes de produits (2) se suivant dans la direction de convoyage (A) du trajet de transport (6, 8, 14), un groupe de produits (2) en avance de phase au niveau d'une position d'empilage (11) avant de déposer ce dernier sur le groupe de produits (2) parvenue à la position d'empilage (11), convoyé en continu au moyen du trajet de transport (8).

2. Dispositif selon la revendication 1, **caractérisé par** un transporteur (8) interne au dispositif, lequel permet de déplacer les groupes de produits (2) amenés au dispositif (1) respectivement au niveau de la position d'empilage (11) du système de préhension et de levage (12).

3. Dispositif selon la revendication 1 ou 2, **caractérisé en ce que** le mouvement de levage (B) de la tête de préhension (16) est synchronisé avec le mouvement de convoyage du trajet de transport (6, 8, 14) ou du transporteur (8) interne au dispositif.

4. Dispositif selon l'une quelconque des revendications précédentes, **caractérisé en ce que** la tête de préhension (16) au moins au nombre de une présente des entraîneurs (19), qui peuvent être commandés entre un état actif servant à saisir et à maintenir le groupe de produits (2) à soulever respectivement et un état non actif servant à libérer ledit groupe de produits (2).

5. Dispositif selon la revendication 4, **caractérisé en ce que** les entraîneurs (19) sont formés par des doigts mobiles, par exemple mobiles axialement.

6. Dispositif selon l'une quelconque des revendications précédentes, **caractérisé par** des moyens (20) servant à positionner exactement le groupe de produits (2) respectivement saisi avec la tête de préhension (16) dans la tête de préhension (16) avant le dépôt sur un autre groupe de produits (2) se trouvant au niveau de la position d'empilage (11).

7. Dispositif selon la revendication 6, **caractérisé en ce que** les moyens (20) servant au positionnement sont prévus au niveau de la tête de préhension (16) au moins au nombre de une.

8. Dispositif selon la revendication 6 ou 7, **caractérisé en ce que** les moyens (20) servant au positionnement sont formés par des étriers pouvant pivoter de manière commandée.

9. Dispositif selon l'une quelconque des revendications précédentes 4 à 8, **caractérisé en ce que** les entraîneurs (19) se trouve sous le plan de transport des groupes de produits (2), dans la position inférieure du mouvement de levage (B) de la tête de préhension (16) au moins au nombre de une.

10. Dispositif selon l'une quelconque des revendications précédentes 4 à 9, **caractérisé en ce que** les entraîneurs (19) se trouvent dans la position supérieure du mouvement de levage (B) de la tête de préhension (16) au moins au nombre de un, sur un niveau au-dessus du côté supérieur des groupes de produits (2) au niveau de la position d'empilage (11).

11. Dispositif selon l'une quelconque des revendications précédentes 4 à 10, **caractérisé en ce que** le transporteur (8) interne au dispositif est formé par au moins un élément de transport à bande et/ou à chaîne entraîné sans fin (9).

12. Dispositif selon la revendication 11, **caractérisé en ce que** l'élément de transport (9) au moins au nombre de un forme avec une longueur de boucle supérieure un plan de transport ou une surface de transport, sur laquelle se trouvent les groupes de produits (2).

13. Dispositif selon l'une quelconque des revendications 11 ou 12, **caractérisé en ce que** l'élément de transport (9) au moins au nombre de un est réalisé avec des entraîneurs (10) coopérant avec les groupes de produits (2).

14. Dispositif selon l'une quelconque des revendications précédentes 2 à 13, **caractérisé en ce que** le transporteur (8) interne au dispositif est formé par plusieurs éléments de transport (9) disposés de manière parallèles les uns par rapport aux autres, entraînés en rotation sans fin.

15. Dispositif selon l'une quelconque des revendications précédentes, **caractérisé par** des moyens servant à générer une distance mécanique prédéfinie entre les groupes de produits (2) se suivant dans la direction de transport (A) au moins lors du déplacement au niveau de la position d'empilage (11).

16. Dispositif selon l'une quelconque des revendications précédentes 2 à 15, **caractérisé en ce que** les entraînements au moins du transporteur (8) interne au dispositif, du mouvement de levage de la tête de préhension (16) au moins au nombre de une, des entraîneurs (19) au niveau de la tête de préhension (16) ainsi qu'éventuellement des moyens (20) servant au positionnement sont synchronisés de telle manière qu'un empilement des groupes de produits (2) est effectué en continu, c'est-à-dire lors d'un fonctionnement en continu ou quasi en continu du dispositif (1).

17. Dispositif selon l'une quelconque des revendications précédentes, **caractérisé par** sa réalisation pour empiler des groupes de produits (2) sous la forme de colis respectivement constitué de plusieurs récipients ou bouteilles (4) rassemblés pour former un tel colis (2).

18. Procédé servant à empiler en continu des groupes de produits (2), **caractérisé en ce qu'**un dispositif selon l'une quelconque des revendications 1 à 17 est utilisé, sachant que la tête de préhension (16) au moins au nombre de une est commandée de telle manière que le premier groupe de produits (2) respectif saisi et soulevé par cette tête de préhension (16) se trouve dans la position de levage supérieure de la tête de préhension (16) à distance au-dessus d'un autre groupe de produits (2) déplacé au niveau de la position d'empilage (11), et **en ce que** le fait de poser le premier groupe de produits (2) saisi avec la tête de préhension (16) sur l'autre groupe de produits (2) en abaissant la tête de produit (16) ou lors de l'abaissement de la tête de préhension (16) dans la position de levage inférieure, sachant que l'autre groupe de produits (2) est convoyé en continu dans la direction de transport.
